# EUROPÄISCHE PATENTSCHRIFT

(11) **EP 3 402 740 B1**
(45) Veröffentlichungstag und Bekanntmachung des Hinweises auf die Patenterteilung: **11.10.2023**
(21) Anmeldenummer: 17701429.7
(22) Anmeldetag: 12.01.2017
(51) Int. Cl.: B67D 1/08

(54) **KARTUSCHE FÜR EIN GETRÄNKE- ODER LEBENSMITTELSUBSTRAT**
CARTRIDGE FOR A BEVERAGE OR FOOD SUBSTRATE
CARTOUCHE POUR SUBSTRAT DE BOISSON OU D'ALIMENT

(30) Priorität: 12.01.2016 DE 102016200254; 01.07.2016 DE 102016212012; 01.07.2016 DE 102016212013; 27.09.2016 DE 102016218509; 27.09.2016 DE 102016218507; 29.09.2016 DE 102016218884
(43) Veröffentlichungstag der Anmeldung: 21.11.2018
(60) Teilanmeldung: 20157882.0
(73) Patentinhaber: Freezio AG, 8580 Amriswil (CH)
(72) Erfinder: KRÜGER, Marc, 51467 Bergisch Gladbach (DE); EMPL, Günter, 51429 Bergisch Gladbach (DE); FISCHER, Daniel, 8590 Romanshorn (CH)
(74) Vertreter: Loock, Jan Pieter
(86) Internationale Anmeldenummer: PCT/EP2017/050563
(87) Internationale Veröffentlichungsnummer: WO 2017/121798

(56) Entgegenhaltungen:
- EP-A1- 2 017 219
- EP-A2- 1 671 568
- WO-A1-2011/084603
- DE-A1-102009 052 513

## Beschreibung

### Stand der Technik

Die Erfindung betrifft eine Kartusche mit einem Wandbereich, an dessen einem Ende sich ein Verbindungsbereich anschließt, der, insbesondere mit einer Membran, verschlossen ist und an dessen gegenüberliegendem Ende gegebenenfalls ein Bodenbereich vorgesehen ist, wobei der Wandbereich und gegebenenfalls der Bodenbereich einen Hohlraum aufspannen, der ein Getränke- und/oder Lebensmittelsubstrat aufnimmt.

Derartige Kartuschen sind aus dem Stand der Technik, beispielsweise aus EP 1 671 568 A2 und WO 2011/084603 A1, bekannt und werden beispielsweise zur Herstellung von Kaltgetränken eingesetzt. Dabei wird die Kartusche in einen Dispenser eingesetzt und das Getränkesubstrat, das sich in der Kartusche befindet mit einem Lösungsmittel, insbesondere Wasser vermischt. In der Vergangenheit hat es bei solchen Systemen oftmals Probleme beim Einsetzen der Kartusche in den Dispenser und/oder beim Abdichten der Schnittstelle Kartusche/Dispenser gegeben.

### Offenbarung der Erfindung

Es war deshalb die Aufgabe der vorliegenden Erfindung eine Kartusche zu Verfügung zu stellen, die die Nachteile des Standes der Technik nicht aufweist.

Gelöst wird die Ausgabe mit einer Kartusche mit einem Wandbereich, an dessen einem Ende sich ein Verbindungsbereich anschließt, der, insbesondere mit einer Membran, verschlossen ist und an dessen gegenüberliegendem Ende gegebenenfalls ein Bodenbereich vorgesehen ist, wobei der Wandbereich und gegebenenfalls der Bodenbereich einen Hohlraum aufspannen, der ein Getränke- und/oder Lebensmittelsubstrat aufnimmt, wobei der Verbindungsbereich wenigstens einen Flansch aufweist, der mit einem Positioniermittel versehen ist, wobei das Positioniermittel einer geradlinigen Umfangsbereich des wenigstens einen Flansches umfasst, wobei der Umfang des Flansches außerhalb des geradlinigen Umfangsbereichs gekrümmt ausgebildet ist und wobei zwischen dem Wandbereich und dem Verbindungsbereich ein Hals vorgesehen ist. Die zu diesem Gegenstand der vorliegenden Erfindung gemachten Ausführungen gelten für die anderen Gegenstände der vorliegenden Erfindung gleichermaßen und umgekehrt.

Die vorliegende Erfindung betrifft eine Kartusche, die vorzugsweise aus Kunststoff, insbesondere durch ein Moulding- und/oder ein Blasverfahren hergestellt wird. Die Kartusche weist eine Seitenwand auf, die beispielsweise zumindest teilweise einen runden, rechteckigen, quadratischen, konischen oder ovalen Querschnitt aufweist. An einem Ende der Seitenwand ist in der Regel ein Boden, insbesondere einstückig vorgesehen. Die Seitenwand und gegebenenfalls der Bodenbereich spannen einen Hohlraum auf, in dem ein Getränke- und/oder Lebensmittelsubstrat, insbesondere in flüssiger Form vorgesehen ist. An dem anderen Ende des Wandbereichs ist ein Verbindungsbereich vorgesehen, mit dem die Kartusche mit einer Kartuschenaufnahme verbunden wird. Diese Kartuschenaufnahme kann Teil eines Dispensers oder ein vom Dispenser separates Bauteil sein.

Erfindungsgemäß ist der Verbindungsbereich so vorgesehen, dass er wenigstens einen Flansch aufweist. Der Flansch steht aus dem Verbindungsbereich hervor und steht vorzugsweise in einem Winkel, besonders bevorzugt einem rechten Winkel von einem Wandbereich des Verbindungsbereichs ab. Zur Herstellung des Getränks oder Lebensmittels ist der Flansch vorzugsweise horizontal ausgerichtet. Vorzugsweise ist der Flansch aus Vollmaterial, d.h. nicht hohl gefertigt.

Weiterhin erfindungsgemäß ist der Flansch mit einem Positioniermittel versehen. Das Positioniermittel stellt sicher, dass die Kartusche nur in einer bestimmten Position, insbesondere in einem bestimmten Drehwinkel, insbesondere Bezogen auf die Längsmittelachse der Kartusche an dem Dispenser und/oder an der Kartuschenaufnahme angeordnet werden kann.

Vorzugsweise weist die Kartusche zwei Flansche auf, welche in Längsrichtung zueinander versetzt angeordnet sind. Entweder weist nur einer der beiden Flansche oder beide Flansche das Positioniermittel auf.

Vorzugsweise ist das Positioniermittel eine Ein- und/oder Ausbuchtung, die aus dem Flansch, insbesondere dessen Umfang hervorsteht. Vorzugsweise ist das Positioniermittel einstückig mit dem Flansch vorgesehen. Beispielsweise ist das Positioniermittel als Nase ausgebildet, die an einer Stelle an den Umfang des Flanschs angeformt ist. Die Dicke des Positioniermittels entspricht dabei zumindest im Wesentlichen der Dicke des Flanschs.

Besonders bevorzugt umfasst das Positioniermittel einen geradliniger Umfangsbereich des wenigstens einen Flansches. Der Flansch ist insbesondere derart ausgebildet, dass sein Umfang außerhalb des geradlinigen Umfangsbereichs gekrümmt ist. Die Form des Flansches in einer zur Längsachse senkrechten Ebene (auch als Querschnitt oder Querschnittsebene bezeichnet) ist also oval oder rund mit einer flachen bzw. geradlinigen Seite, welche das Positioniermittel bildet. Anhand der abgeflachten Seite kann die Orientierung der Kartusche um seine Längsachse festgelegt werden. Besonders bevorzugt ist im Übergangsbereich zwischen dem geradlinigen Umfangsbereich und dem gekrümmten Umfangsbereich jeweils eine sich parallel zur Längsachse der Kartusche erstreckende Kante ausgebildet. Typischerweise weist der Flansch genau zwei solcher Kanten auf und zwar jeweils eine Kante an einem Ende des abgeflachten Bereichs. Auch anhand der Kanten ist vorteilhafterweise eine eindeutige Orientierung der Kartusche festlegbar.

Erfindungsgemäß ist zwischen dem Wandbereich und dem Verbindungsbereich ein Hals vorgesehen. Dieser Hals kann beispielsweise einen runden Querschnitt aufweisen. Der Hals stellt den Wandbereich des Verbindungsbereichs dar. Der Flansch schließt sich vorzugsweise rechtwinklig an den Hals an.

Vorzugsweise ist die Membran, die die Kartusche vor deren Gebrauch, insbesondere hermetisch verschließt, an dem Flansch oder einem der beiden Flansche, insbesondere dessen Stirnfläche, vorgesehen, insbesondere gesiegelt. Dafür kann der Flansch, insbesondere dessen Stirnfläche eine Wulst, insbesondere eine kreisringförmige Wulst aufweisen, die beim Siegeln mit dem Siegelwerkzeug zusammenwirkt. Vorzugsweise ist der äußere Umfang der Membran geringer als der äußere Umfang des Flansches. Wenn zwei Flansche realisiert sind, dann ist die Membran vorzugsweise nur am äußeren Flansch vorgesehen.

Vorzugsweise ist im Wandbereich und/oder im Bereich des Halses ein Befestigungsmittel vorgesehen ist. Mit diesem Befestigungsmittel kann die Kartusche mit einem Dispenser verbunden werden. Das Befestigungsmittel kann beispielsweise eine Nut sein, in die ein Befestigungsmittel an dem Dispenser eingreift.

Die Kartusche kann eine Identifizierung aufweisen, mit der es möglich ist die Kartusche zu Individualisieren. Diese Identifizierung kann beispielsweise ein Mittel sein, das von einem Lesermittel an dem Dispenser anhand von elektromagnetischen Signalen und/oder mechanischen Mitteln ausgelesen wird. Beispielsweise ist die Identifizierung ein Barcode, eine Prägung, die elektromagnetische Wellen, beispielsweise Licht, das von ihr reflektiert wird verändert und/oder absorbiert oder ein FID oder RFID. Die Identifizierung kann beispielweise Informationen über den Hersteller der Kapsel, den Inhalt der Kapsel und/oder das Verfalldatum enthalten. Anhand dieser Informationen kann der Dispenser festlegen, ob überhaupt ein Getränk oder Lebensmittel hergestellt wird und wenn ja wann, welche unter welchen Bedingungen. Beispielsweise kann automatisch die Wassermenge vorgegeben werden, die mit dem Substrat vermischt wird und/oder es kann festgelegt werden, ob das Wasser karbonisiert werden soll.

Die Individualisierung kann nach dem Gebrauch der Kartusche unbrauchbar gemacht werden

Dies kann mit elektromagnetischer Strahlung und/oder mechanisch erfolgen, letzteres beispielsweise wenn die Kartusche und die untern beschriebene Kartuschenaufnahme relativ zueinander bewegt werden.

Noch ein Gegenstand der vorliegenden Erfindung ist ein System aufweisend die erfindungsgemäße Kartusche und eine Kartuschenaufnahme, die an dem Verbindungsbereich der Kartusche vorgesehen ist.

Die zu diesem Gegenstand der vorliegenden Erfindung gemachten Ausführungen gelten für die anderen Gegenstände der vorliegenden Erfindung gleichermaßen und umgekehrt.

Dieser Gegenstand der vorliegenden Erfindung betrifft ein System bestehend aus der erfindungsgemäßen Kartusche und einer Kartuschenaufnahme. Die Kartuschenaufnahme kann fest mit der Kartusche verbunden oder ein Austauschteil sein, das nach dem Gebrauch der Kartusche von dieser entfernt und mit einer neuen Kartusche verbunden wird.

Die Kartuschenaufnahme kann aus Kunststoff, insbesondere im Spritzguss gefertigt sein und mit dem Dispenser verbunden werden.

Die Kartuschenaufnahme kann ein Aufstechmittel aufweisen, das die Membran perforiert, so dass das Getränke- und/oder Lebensmittelsubstrat, insbesondere an dem in einen Hohlraum, insbesondere eine Mischkammer der Kartuschenaufnahme fließt. Weiterhin weist die Kartuschenaufnahme vorzugsweise einen Verdünnungsmittel- insbesondere Wasserzulauf, auf. In der vorzugsweise vorhandenen Mischkammer kann das Getränke- und/oder Lebensmittelsubstrat mit dem Verdünnungsmittel gemischt werden. Das fertiggestellte Getränk oder Lebensmittel läuft dann über einen Getränke- und/oder Lebensmittelablauf ab.

Gemäß einer bevorzugten Ausführungsform sind der Verdünnungsmittel- insbesondere Wasserzulauf und der Getränke- und/oder Lebensmittelablauf an gegenüberliegenden Enden der Kartuschenaufnahme vorgesehen. Dazwischen befindet sich die Mischkammer, in der das Getränke- und/oder Lebensmittelsubstrat mit dem Verdünnungsmittel gemischt wird. Diese bevorzugte Ausführungsform der vorliegenden Erfindung hat den Vorteil, dass eine besonders gute Vermischung zwischen den beiden Komponenten erfolgt.

Vorzugsweise ist das Aufstechmittel in einer Flucht mit dem Verdünnungsmittelinsbesondere Wasserzulauf und dem Getränke- und/oder Lebensmittelablauf vorgesehen. Sobald die Membran aufgestochen ist, fließt das Getränke- und/oder Lebensmittelsubstrat aufgrund von Gravitation und/oder Druck, insbesondere an dem Aufstechmittel vorbei in die Mischkammer. Durch die bevorzugte Anordnung des Aufstechmittels wird wiederum eine besonders gute Mischung zwischen dem Getränke- und/oder Lebensmittelsubstrat und dem Lösungsmittel erzielt.

Vorzugsweise erweitert sich bezogen auf die Strömungsrichtung des Lösungsmittels der Strömungsquerschnitt der Mischkammer zunächst und verengt sich dann wieder, bevor das fertiggestellte Getränk die Mischkammer verlässt.

Vorzugsweise deckt das Abdeckmittel, das an dem Flansch der Kartusche vorgesehen ist den Getränke- und/oder Lebensmittelablauf den Kartuschenaufnahme ab.

Vorzugsweise wirkt der Flansch an der Kartusche, insbesondere deren Umfang dichtend mit der Kartuschenaufnahme zusammen. Dafür kann der Umfang des Flansches beispielsweise in eine Nut in der Kartuschenaufnahme eingreifen. Diese Flansch/Nut-Verbindung kann auch als Kraftschluss dienen, um zu verhindern, dass sich die Kartusche relativ zu der Kartuschenaufnahme während der Getränke- oder Lebensmittelherstellung verschiebt und die Verbindung zwischen Kartusche und Kartuschenaufnahme undicht wird.

Gemäß einer bevorzugten Ausführungsform sind die Kartusche und die Kartuschenaufnahme. Insbesondere bevor die Membrane angestochen wird, längsverschieblich zueinander vorgesehen. Durch diese Längsverschiebung kann das Aufstechmittel dann mit der Membrane in Eingriff gebracht werden und diese durchstechen. Vorzugsweise sind die Kartusche und die Kartuschenaufnahme drehfest miteinander verbunden.

Vorzugsweise weist das Aufstechmittel einen Kanal auf. Durch diesen Kanal kann ein Gas in die Kartusche gedrückt werden, das das Getränke- und/oder Lebensmittelsubstrat aus der Kartusche insbesondere in den Mischraum der Kartuschenaufnahme drückt.

Vorzugsweise weist die Kartuschenaufnahme eine Dornführung auf, wobei das Aufstechmittel verschiebbar innerhalb der Dornführung gelagert ist, wobei das Aufstechmittel zwischen einer eingefahrenen Position, in welcher das Aufstechmittel von der Membran beabstandet ist, und einer ausgefahrenen Position, in welcher das Aufstechmittel die Membran der Kartusche durchsticht und bis in die Kartusche ragt, verschiebbar ist. In die Außenwandung des Aufstechmittels ist vorzugsweise wenigstens ein Seitenkanal zum Leiten des Getränke- und/oder Lebensmittelsubstrats in Richtung der Mischkammer, wenn die Membran von dem Aufstechmittel durchstochen ist, eingebracht. Ferner ist in das Aufstechmittel besonders bevorzugt eine Druckluftleitung integriert, wobei an einer der Kartusche abgewandten Seite des Aufstechmittels ein, insbesondere von außerhalb der Kartuschenaufnahme zugänglicher Druckluftanschluss zur Verbindung mit einer Druckluftquelle ausgebildet ist und wobei an einer der Kartusche zugewandten Seite des Aufstechmittels ein

### Figurenbeschreibung

Im folgendem wird die Erfindung anhand der Figuren 1 bis 9 erläutert. Diese Erläuterungen sind lediglich beispielhaft und schränken den allgemeinen erfindungsgemäßen Gedanken nicht ein. Die Erläuterungen gelten für die erfindungsgemäße Kartusche und für das erfindungsgemäße System gleichermaßen.
- Figuren 1 - 4: zeigen eine erste Ausführungsform des erfindungsgemäßen Systems.
- Figuren 5 - 8: zeigen noch eine Ausführungsform des erfindungsgemäßen Systems.
- Figur 9: zeigt eine Ausführungsform mit einem Befestigungsmittel.
- Figur 10: zeigt eine Kartusche eines Kartuschensystems gemäß einer weiteren Ausführungsform der vorliegenden Erfindung
- Figur 11: zeigt eine Kartuschenaufnahme eines Kartuschensystems gemäß der weiteren Ausführungsform der vorliegenden Erfindung
- Figur 12: zeigt einen Dorn der Kartuschenaufnahme gemäß der weiteren Ausführungsform der vorliegenden Erfindung

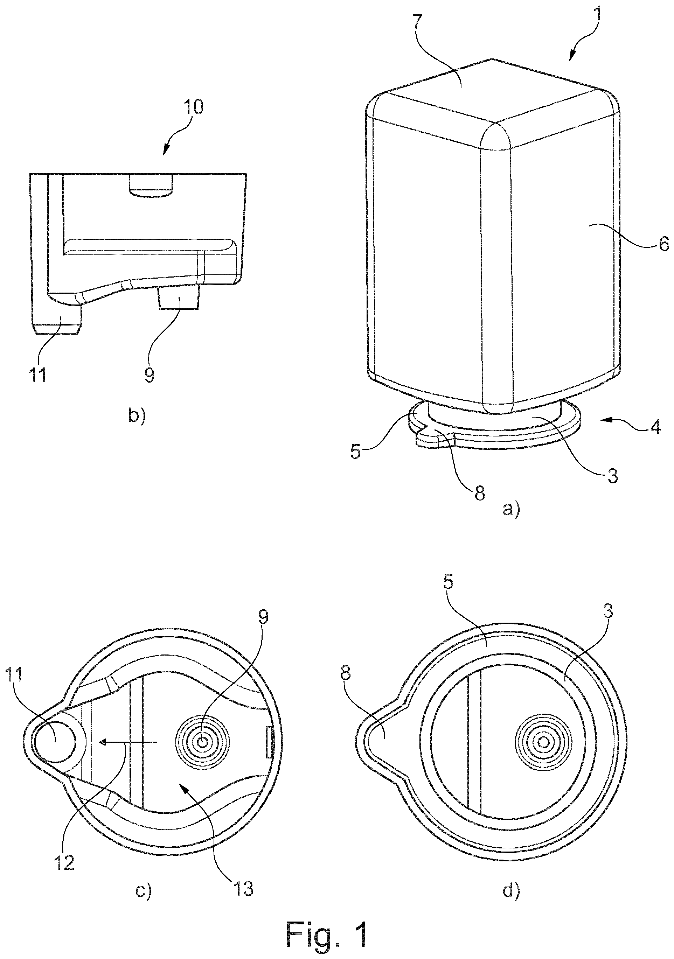

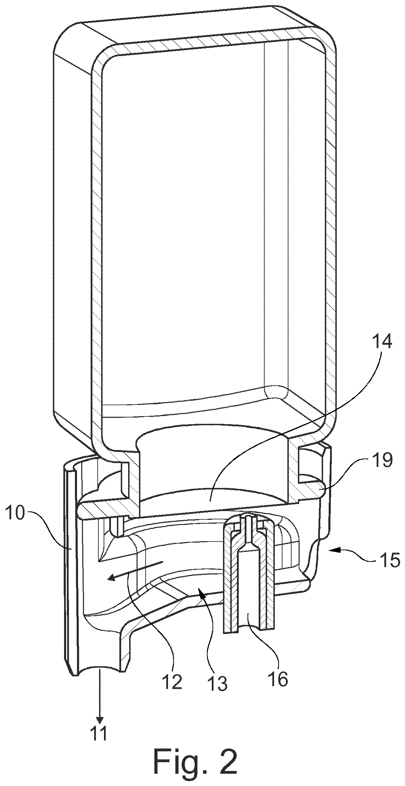

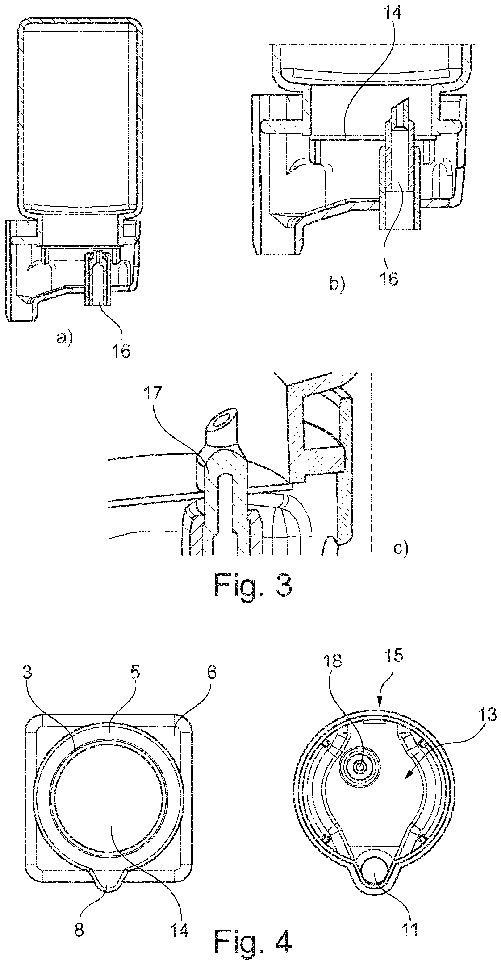

Figuren 1 - 4 zeigen eine erste Ausführungsform des erfindungsgemäßen Systems, das aus einer Kartusche 1 sowie einer Kartuschenaufnahme 10 besteht. Die Kartusche wird vorzugsweise aus einem Kunststoffmaterial gefertigt, beispielsweise durch Spritzen oder Spritzgießen oder durch eine Blastechnik. Die Kartusche weist einen, in dem vorliegenden Fall quadratischen, Wandbereich 6 auf, an dessen einem, hier oberen, Ende sich ein Bodenbereich 7 anschließt. Der Wandbereich 6 und der Bodenbereich 7 begrenzen einen Hohlraum, in dem sich das Getränke- und/oder Lebensmittelsubstrat, insbesondere ein Konzentrat, befindet, mit dem ein Getränk oder Lebensmittel hergestellt werden kann. An dem dem Bodenbereich gegenüberliegenden Ende, hier unteren Ende, des Wandbereiches ist ein Verbindungsbereich 4 vorgesehen, der in dem vorliegenden Fall einen Hals 3 sowie einen Flansch 5 aufweist. Der Hohlraum der Kartusche wird nach deren Befüllung durch einen Verschluss 14, hier eine Membran, hermetisch abgeschlossen. Die Membran 14, insbesondere eine Kunststofffolie wird vorzugsweise stoffschlüssig, insbesondere durch Siegeln mit dem Flansch verbunden. Mit dem Verbindungsbereich wird die Kartusche mit einer Kartuschenaufnahme verbunden. An dem Flansch 5 ist ein Positionier- und/oder Abdeckmittel 8 vorgesehen, das in dem vorliegenden Fall als Ausbuchtung, insbesondere als nasenförmige Ausbuchtung, vorgesehen ist. Die Nase ist hier einstückig an den Flansch angeformt. Des Weiteren weist das System, wie insbesondere den Figuren 1 b) und c) entnommen werden kann, eine Kartuschenaufnahme 10 auf. Diese Kartuschenaufnahme weist einen Lösemittel- insbesondere Wasserzulauf 15 (vergleiche Figur 2) sowie eine Mischkammer 13 auf, in der das Lösemittel und das Getränke- und/oder Lebensmittelsubstrat gemischt werden. Die Strömungsrichtung des Gemisches ist in Figur 1 c) durch den Pfeil 12 dargestellt. Das fertiggestellte Getränk/Lebensmittel verlässt die Mischkammer durch den Getränke- und/oder Lebensmittelablauf 11 und wird in einem Behälter, beispielsweise einem Glas aufgefangen. Weiterhin wie insbesondere der Figur 2 entnommen werden kann, weist die Kartuschenaufnahme ein Aufstechmittel 16, hier einen Dorn 16, auf, der wie insbesondere anhand Figur 3 zu sehen ist, die Membrane, die an den Flanschbereich der Kartusche gesiegelt ist, aufsticht, so dass das Getränke- oder Lebensmittelsubstrat insbesondere entlang der Außenfläche des Dorns, der dafür an seiner Außenseite vorzugsweise mit Ablaufkanälen 17 versehen ist, in die Strömungskammer 13 fließen kann.

Figur 2 zeigt das System, bevor das Aufstechmittel 16 mit der Membrane 14 in Eingriff gelangt. Um dies zu erreichen werden die Kartusche und/oder die Kartuschenaufnahme relativ sowie längs zueinander verschoben, so dass der Dorn 16 die Membrane 14 durchdringt, was insbesondere anhand von Figur 3 c) deutlich zu sehen ist. In dieser Figur können auch besonders gut die Kanäle 17 erkannt werden, durch die das Substrat in die Mischkammer fließt. Der Fluss des Substrates in die Mischkammer kann durch Gas, das durch einen Kanal 18 in dem Aufstechdorn 16 in die Kartusche gedrückt wird, beschleunigt und gezielt gesteuert werden. Beispielsweise kann der Druck in der Kartusche dem Volumenstrom des Lösemittels angepasst werden.

Wie insbesondere den Figuren 1 d) sowie Figur 4 entnommen werden kann, wirkt der Flansch 5 der Kartusche 1 dichtend mit der Kartuschenaufnahme zusammen und stellt dadurch sicher, dass Flüssigkeit die Mischkammer nur durch den Getränke- und/oder Lebensmittelablauf 11 verlässt. Des Weiteren kann insbesondere diesen Figuren entnommen werden, dass die Ausbuchtung 8 in dem vorliegenden Fall nicht nur ein Positioniermittel ist, sondern auch den Getränke- und/oder Lebensmittelablauf 11 in der Kartuschenaufnahme insbesondere dichtend abdeckt. Der Flansch 8 und die daran vorgesehene Ausbuchtung 8 können mit ihrer Stirnfläche und/oder mit ihrem Umfang dichtend mit entsprechenden Flächen der Kartuschenaufnahme zusammenwirken.

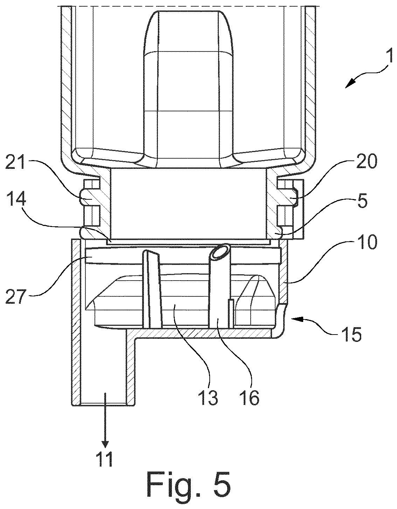

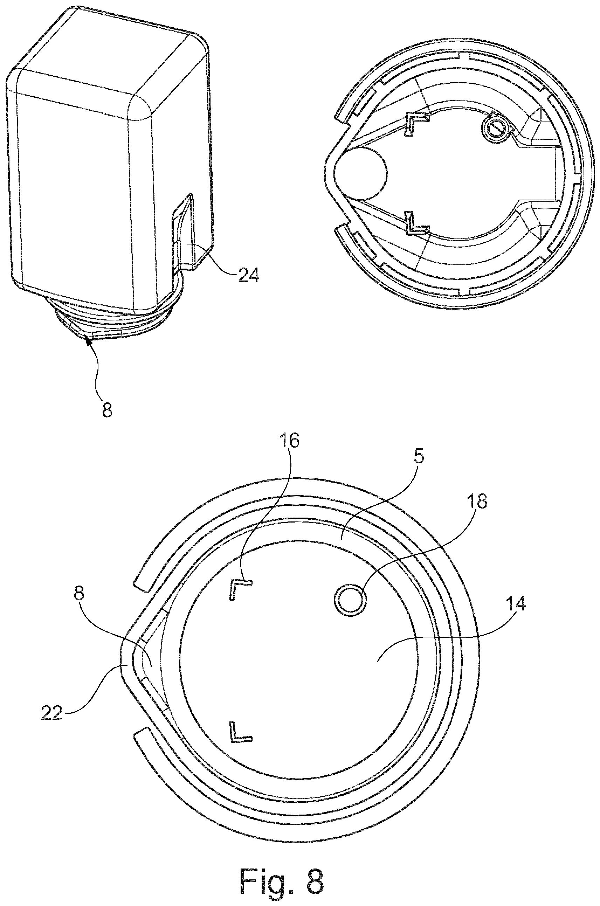

Die Figuren 5 - 8 zeigen eine weitere Ausführungsform des erfindungsgemäßen Systems. Bezüglich der Kartusche kann im Wesentlichen auf die Ausführung zu den Figuren 1 bis 4 verwiesen werden, wobei die Kartusche in ihrem Verbindungsbereich neben dem Flansch 5 noch ein Befestigungsmittel 20 aufweist, das die Kartusche 1 mit der Kartuschenaufnahme 10 verbindet. Des Weiteren weist der Wandbereich 6 in dem vorliegenden Fall eine Einbuchtung 24 auf, die eine Längsverschiebung zwischen der Kartusche und der Kartuschenaufnahme und gegebenenfalls einem Dispenser erlaubt und die auch eine Führung für die Kartusche darstellt.

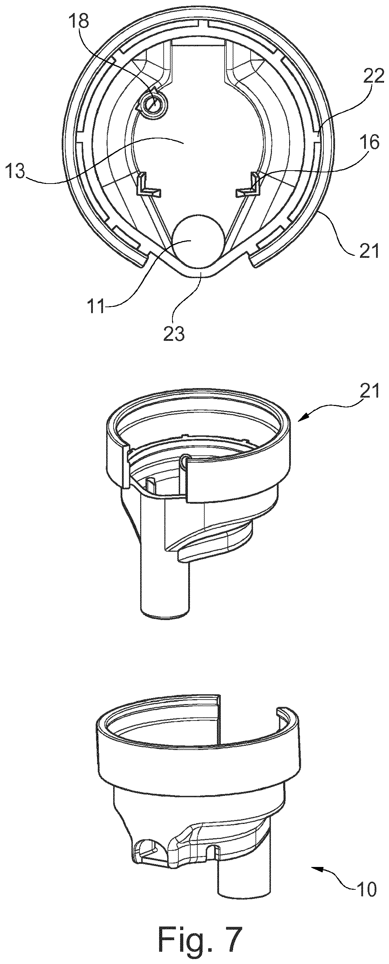

Auch bezüglich der Kartuschenaufnahme 10 kann auf die Ausführung gemäß den Figuren 1 - 4 verwiesen werden. Wie jedoch insbesondere Figur 7 entnommen werden kann, weist die Kartuschenaufnahme in dem vorliegenden Fall einen Befestigungs- beziehungsweise Sicherungsring 21 auf, der mittels Deformations- und/oder Sollbruchstellen 22 mit der Mischkammer 13 verbunden ist. Dieser Ring 21 wirkt kraftschlüssig mit dem Befestigungsmittel 20, beispielsweise hier einem Bund 20, das an der Kartusche vorgesehen ist, zusammen. Des Weiteren ist in Figur 7 deutlich zu erkennen, dass die Kartuschenaufnahme 10 neben dem Dorn 18 noch weitere Aufstechmittel 16 aufweist. Durch den Dorn 18 wird ein Gas in die Kartusche gedrückt, das das Substrat aus der Kartusche herausdrückt. Die Öffnungsmittel 16 schneiden, hier gewinkelte Schnitte, in die Membran hinein, die dann Laschen bilden, die unter dem Druck des Substrates nach unten gedrückt werden und somit einen leichteren Abfluss des Substrats ermöglichen. Der Fachmann erkennt, dass auch ein Aufstechmittel 16 genügen kann, beziehungsweise dass es auch möglich ist das Aufstechen der Membran und Ablaufen des Substrats wie anhand der Figuren 1 - 4 erläutert in dem vorliegenden Fall einzusetzen. Selbstverständlich können auch die hiesigen Öffnungsmittel 16, 18 auf die Ausführungsform gemäß den Figuren 1 bis 4 übertragen werden.

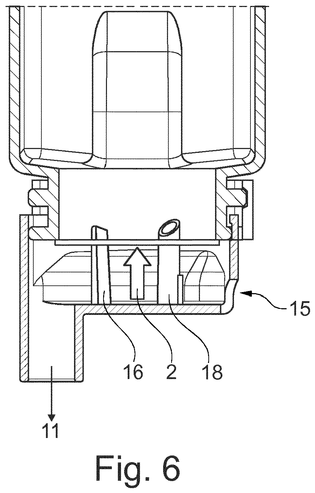

Figur 5 zeigt das System vor dem aufstechen. Figur 6 zeigt das System nachdem die Membrane aufgestochen worden ist. Durch eine mittels Pfeil 2 dargestellte Relativbewegung zwischen der Mischkammer 13 und der Kartusche 1, werden die Solldeformationsbeziehungsweise Sollbruchstellen 22 so deformiert beziehungsweise zerstört, dass sich die Kartusche gemeinsam mit dem Ring 21 in Richtung der Mischkammer 13 bewegen kann. Durch diese Bewegung, bei der der Flansch 5 auch in die Nut 27 eingeführt wird und mit dieser dichtend zusammenwirkt, wird die Membrane 14 perforiert und das Substrat kann aus der Kartusche in die Mischkammer strömen, in der es mit einem Lösungsmittel, das durch den Verdünnungsmittel- insbesondere Wasserzulauf 15 in die Mischkammer dosiert wird, gemischt wird und die Mischkammer durch den Getränke- und/oder Lebensmittelablauf 11 verlässt.

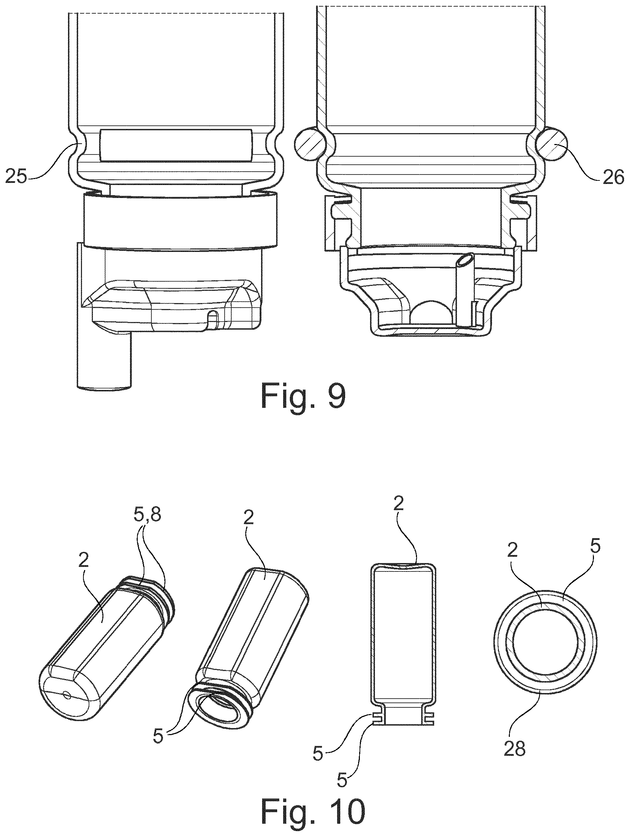

Figur 9 zeigt ein Befestigungsmittel hier eine Nut 25 im Wandbereich der Kartusche. In diese Nut kann ein Befestigungsmittel 26 eingreifen, mit dem die Kartusche an einem Dispenser befestigt wird.

In Figur 10 sind vier Abbildungen einer Kartusche 2 gemäß einer weiteren beispielhaften Ausführungsform dargestellt. Die Kartusche 2 und das zugehörige Kartuschensystem aus Kartusche 2 und Kartuschenaufnahme 10 ähnelt in ihrer Funktionsweise der anhand Figuren 1 bis 4 erläuterten Kartusche 2 gemäß der ersten Ausführungsform der vorliegenden Erfindung.

Die in Figur 10 gezeigten Kartusche 2 weist im Unterschied allerdings zwei Flansche 5 auf. Beide Flansche 5 dienen zur Befestigung der Kartuschenaufnahme 10 an der Kartusche 2. Am äußeren Flansch 5 ist zudem die Membran 15 angesiegelt.

Der Querschnitt (senkrecht zur Längsachse der Kartusche 2) beider Flansche 5 weist einen im Wesentlichen runden Umfang auf, wobei an einer Seite ein geradliniger Umfangsbereich 28 vorgesehen ist. Im geradlinigen oder abgeflachten Umfangsbereich 28 verläuft der Umfang als nahezu gerade Linie (zu erkennen an der Unterseite des Flansches 5 in der rechten Abbildung in Figur 10), während der Umfang des Flansches 5 außerhalb des geradlinigen Umfangsbereich 28 als gekrümmte Linie verläuft. Der geradlinige Umfangsbereich 28 dient als Positioniermittel, wodurch die Orientierung der Kartusche 2 gegenüber der Kartuschenaufnahme 10 festgelegt wird.

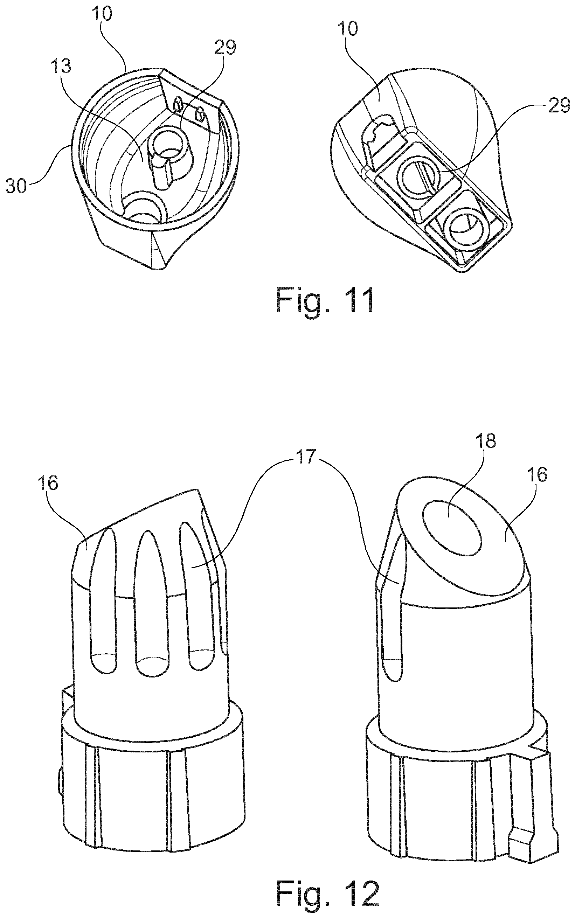

In Figur 11 ist die passende Kartuschenaufnahme 10 zu sehen. Es ist zu erkennen, dass der Umfang der Kartuschenaufnahme 10 eine zur Kontur der beiden in Figur 10 dargestellten Flansche 5 korrespondierende Form aufweist, so dass die Kartusche 2 und Kartuschenaufnahme 10 nur in einer bestimmten Orientierung zueinander miteinander verbunden werden können. Der geradlinige Umfangsbereich 28 dient somit als Verdrehschutz. Vorteilhafterweise wird hierdurch auch definiert, in welchem Bereich der Kartusche 2 das Gas in den Hohlraum gedrückt wird.

Innerhalb der Mischkammer 13 ist eine Dornführung 29 angeordnet, in welcher der Dorn 16 (auch als Aufstechmittel bezeichnet) beweglich geführt ist. Die Perforation der Membran 14 wird bei der weiteren Ausführungsform also nicht durch eine Relativbewegung zwischen Kartusche 1 und Kartuschenaufnahme 10 herbeigeführt, sondern der Dorn 16 ist beweglich in der fest relativ zur Kartusche 1 fixierten Kartuschenaufnahme 10 geführt. Auf diese Weise kann der Dorn 16 von einer eingefahrenen Position (entspricht vor allem dem Ausgangszustand des Systems), in welcher Dorn 16 von der Membran 14 beabstandet ist, in eine ausgefahrene Position überführt werden, in welcher der Dorn 16 in den Hohlraum der Kartusche 1 vorsteht und dabei die Membran 14 perforiert. In dieser ausgefahrenen Position ist die Kartusche 1 also geöffnet und die Substanz kann durch Ablaufkanäle 17 in der Außenfläche des Dorns 16 an der Membran 14 vorbei in die Mischkammer 13 gelangen.

An einer der Kartusche 2 zugewandten Seite der Kartuschenaufnahme 10 ist eine Rastleiste 30 vorgesehen, welche zum Befestigen der Kartusche 2 an der Kartuschenaufnahme 10 einen der beiden Flansche 5 form- und/oder kraftschlüssig umgreift. Auf diese Weise wird eine Relativbewegung zwischen Kartusche 1 und Kartuschenaufnahme 10 unterbunden.

In Figur 12 ist eine schematische Ansicht eines Dorns 16 dargestellt, welcher in der in Figur 11 gezeigten Dornführung 29 geführt wird. Der Dorn 16 weist den inneren Kanal 18 zur Gaszuführung in die Kartusche 2, sowie die äußeren Ablaufkanäle 17, durch welche das Substrat an der mittels des Dorns 16 aufgestochenen Dichtfolie vorbei in die Mischkammer 13 fließen kann, auf. An einer der Kartusche 1 abgewandten Seite des Dorns 16 ist ein von außerhalb der Kartuschenaufnahme 10 zugänglicher Druckluftanschluss der Druckluftleitung 31 zur Verbindung mit einer Druckluftquelle ausgebildet, wobei an einer der Kartusche 1 zugewandten Seite des Doms 16 ein Druckluftausgang der Druckluftleitung 34 zum Einblasen der Druckluft in die Kartusche 1 ausgebildet ist.

Der Dorn 16 ist in der Dornführung 29 derart verschiebbar gelagert, dass er von einer eingefahrenen Position, in welcher er von der Dichtfolie an der Kartusche 2 beabstandet ist, in eine ausgefahrene Position, in welcher er in den Hohlraum der Kartusche 2 ragt und dabei die Dichtfolie durchsticht, verfahren werden kann.

Eine Anordnung, in welcher der in Figur 12 gezeigte Dorn in der Dornführung der in Figur 11 gezeigten Kartuschenaufnahme 10 angeordnet ist und die in Figur 11 gezeigte Kartuschenaufnahme 10 sodann mit der in Figur 10 gezeigten Kartusche 2 verbunden ist, stellt ein Kartuschensystems gemäß einer weiteren beispielhaften Ausführungsform der vorliegenden Erfindung dar.

### Bezugszeichenliste

- 1: Kartusche
- 2: Bewegungsrichtung
- 3: Hals
- 4: Verbindungsbereich
- 5: Flansch
- 6: Wandbereich
- 7: Bodenbereich
- 8: Positionier- und/oder Abdeckmittel, Ein- und/oder Ausbuchtung,
- 9: Zulauf der Substanz, Aufstechmittel
- 10: Kartuschenaufnahme
- 11: Ablauf Substanz plus Lösungsmittel/Wasser
- 12: Strömungsrichtung Substanz plus Lösungsmittel/Wasser
- 13: Mischkammer
- 14: Verschluss, Membran
- 15: Lösemittel-, Wasserzulauf
- 16: Aufstechmittel, Dorn
- 17: Ablaufkanäle
- 18: Gaseinlass
- 19: Dichtung, Bunddichtung
- 20: Befestigungsmittel, Bund
- 21: Befestigungs-, Sicherungsring
- 22: Deformations- und/oder Sollbruchstelle
- 23: Ein- und/oder Ausbuchtung der Kartuschenaufnahme
- 24: Einbuchtung, Führung
- 25: Formschlussmittel für ein Befestigungsmittel 26
- 26: Befestigungsmittel
- 27: Dichtmittel, Nut
- 28: Geradlinigen Umfangsbereich
- 29: Dornführung
- 30: Rastleiste
- 31: Druckluftleitung

## Patentansprüche

1. Kartusche (1) mit einem Wandbereich (6), an dessen einem Ende sich ein Verbindungsbereich (4) anschließt, der, insbesondere mit einer Membran (14), verschlossen ist und an dessen gegenüberliegendem Ende gegebenenfalls ein Bodenbereich (7) vorgesehen ist, wobei der Wandbereich und gegebenenfalls der Bodenbereich einen Hohlraum aufspannen, der ein Getränke- und/oder Lebensmittelsubstrat aufnimmt, wobei der Verbindungsbereich (4) wenigstens einen Flansch (5) aufweist, der mit einem Positioniermittel versehen ist, **dadurch gekennzeichnet, dass** das Positioniermittel einen geradlinigen Umfangsbereich (28) des wenigstens einen Flansches (5) umfasst, wobei der Umfang des Flansches (5) außerhalb des geradlinigen Umfangsbereichs gekrümmt ausgebildet ist, wobei zwischen dem Wandbereich (6) und dem Verbindungsbereich (4) ein Hals (3) vorgesehen ist.

2. Kartusche (1) nach Anspruch 1, **dadurch gekennzeichnet, dass** im Übergangsbereich zwischen dem geradlinigen Umfangsbereich und dem gekrümmten Umfangsbereich jeweils eine sich parallel zur Längsachse der Kartusche (1) erstreckende Kante ausgebildet ist.

3. Kartusche (1) nach einem der Ansprüche 1 - 2, **dadurch gekennzeichnet, dass** die Membran (14) an einem Flansch vorgesehen ist.

4. Kartusche (1) nach einem der Ansprüche 1 - 3, **dadurch gekennzeichnet, dass** im Wandbereich (6) und/oder im Bereich des Halses ein Befestigungsmittel (26) vorgesehen ist.

5. Kartusche (1) nach einem der Ansprüche 1 - 4, **dadurch gekennzeichnet, dass** die Kartusche (1) zwei Flansche (5) aufweist, welche in Längsrichtung der Kartusche (1) zueinander versetzt angeordnet sind, wobei nur einer der beiden Flansche (5) oder beide Flansche (5) das Positioniermittel aufweisen.

6. System aufweisend eine Kartusche (1) nach einem der voranstehenden Ansprüche und eine Kartuschenaufnahme (10), die an dem Verbindungsbereich (4) der Kartusche vorgesehen ist.

7. System nach Anspruch 6, **dadurch gekennzeichnet, dass** die Kartuschenaufnahme (10) ein Aufstechmittel (16), das die Membran (14) perforiert, einen Verdünnungsmittelinsbesondere Wasserzulauf (15), eine Mischkammer (13), in der das Getränke- und/oder Lebensmittelsubstrat mit dem Verdünnungsmittel gemischt wird und einen Getränke- und/oder Lebensmittelablauf (11) aufweist.

8. System nach einem der Ansprüche 6 oder 7, **dadurch gekennzeichnet, dass** der Verdünnungsmittel- insbesondere Wasserzulauf (15) und der Getränke- und/oder Lebensmittelablauf (11) an gegenüberliegenden Enden der Kartuschenaufnahme (10) vorgesehen sind.

9. System nach einem der Ansprüche 6 - 8, **dadurch gekennzeichnet, dass** das Aufstechmittel (16) in einer Flucht mit dem Verdünnungsmittel- insbesondere Wasserzulauf (15) und dem Getränke- und/oder Lebensmittelablauf (11) vorgesehen ist.

10. System nach einem der Ansprüche 6 - 9, **dadurch gekennzeichnet, dass** sich bezogen auf die Strömungsrichtung des Lösungsmittels der Strömungsquerschnitt der Mischkammer zunächst erweitert und dann wieder verengt.

11. System nach einem der Ansprüche 6 - 10, **dadurch gekennzeichnet, dass** ein Abdeckmittel (8) den Getränke- und/oder Lebensmittelablauf (11) der Kartuschenaufnahme (10) abdeckt.

12. System nach einem der Ansprüche 6 - 11, **dadurch gekennzeichnet, dass** der Flansch dichtend mit der Kartuschenaufnahme (10) zusammenwirkt.

13. System nach einem der Ansprüche 6 - 12, **dadurch gekennzeichnet, dass** die Kartusche (1) und die Kartuschenaufnahme (10) drehfest miteinander verbunden sind.

14. System nach einem der Ansprüche 6 - 13, wobei die Kartuschenaufnahme (10) eine Dornführung (29) aufweist und das Aufstechmittel (16) verschiebbar innerhalb der Dornführung (29) gelagert ist, wobei das Aufstechmittel (16) zwischen einer eingefahrenen Position, in welcher das Aufstechmittel (16) von der Membran (14) beabstandet ist, und einer ausgefahrenen Position, in welcher das Aufstechmittel (16) die Membran (14) durchsticht und bis in die Kartusche (1) ragt, verschiebbar ist.

15. System nach einem der Ansprüche 6 - 14, **dadurch gekennzeichnet, dass** in die Außenwandung des Aufstechmittels (16) wenigstens ein Seitenkanal (71) zum Leiten des Getränke- und/oder Lebensmittelsubstrats in Richtung der Mischkammer (8), wenn die Membran (14) von dem Aufstechmittel (16) durchstochen ist, eingebracht ist.

16. System (10) nach einem der Ansprüche 6 bis 15, wobei in das Aufstechmittel (16) eine Druckluftleitung (31) integriert ist und wobei an einer der Kartusche (1) abgewandten Seite des Aufstechmittels (16) ein, insbesondere von außerhalb der Kartuschenaufnahme (10) zugänglicher Druckluftanschluss der Druckluftleitung (31) zur Verbindung mit einer Druckluftquelle ausgebildet ist und wobei an einer der Kartusche (1) zugewandten Seite des Aufstechmittels (16) ein Druckluftausgang der Druckluftleitung (31) zum Einblasen der Druckluft in die Kartusche (1) ausgebildet ist.

## Claims

1. Cartridge (1) having a wall region (6), one end of which is adjoined by a connecting region (4) which is closed in particular by a membrane (14), and at the opposite end of which optionally a bottom region (7) is provided, wherein the wall region and optionally the bottom region define a cavity which accommodates a beverage substrate and/or foodstuff substrate, wherein the connecting region (4) has at least one flange (5) which is provided with a positioning means, **characterized in that** the positioning means comprises a rectilinear circumferential region (28) of the at least one flange (5), wherein the circumference of the flange (5) is formed in a curved manner away from the rectilinear circumferential region, wherein a neck (3) is provided between the wall region (6) and the connecting region (4) .

2. Cartridge (1) according to Claim 1, **characterized in that** an edge extending parallel to the longitudinal axis of the cartridge (1) is formed in each transition region between the rectilinear circumferential region and the curved circumferential region.

3. Cartridge (1) according to either of Claims 1 - 2, **characterized in that** the membrane (14) is provided on a flange.

4. Cartridge (1) according to one of Claims 1 - 3, **characterized in that** a fastening means (26) is provided in the wall region (6) and/or in the region of the neck.

5. Cartridge (1) according to one of Claims 1 - 4, **characterized in that** the cartridge (1) has two flanges (5) which are arranged in an offset manner with respect to one another in the longitudinal direction of the cartridge (1), wherein only one of the two flanges (5) or both flanges (5) have the positioning means.

6. System having a cartridge (1) according to one of the preceding claims and a cartridge receptacle (10) which is provided in the connecting region (4) of the cartridge.

7. System according to Claim 6, **characterized in that** the cartridge receptacle (10) has a piercing means (16) which perforates the membrane (14), a diluent, in particular water, inflow (15), a mixing chamber (13) in which the beverage substrate and/or foodstuff substrate is mixed with the diluent, and a beverage and/or foodstuff outflow (11).

8. System according to either of Claims 6 and 7, **characterized in that** the diluent, in particular water, inflow (15) and the beverage and/or foodstuff outflow (11) are provided at opposite ends of the cartridge receptacle (10).

9. System according to one of Claims 6 - 8, **characterized in that** the piercing means (16) is provided in a manner aligned with the diluent, in particular water, inflow (15) and the beverage and/or foodstuff outflow (11).

10. System according to one of Claims 6 - 9, **characterized in that**, with regard to the direction of flow of the solvent, the flow cross section of the mixing chamber first expands and then narrows again.

11. System according to one of Claims 6 - 10, **characterized in that** a covering means (8) covers the beverage and/or foodstuff outflow (11) of the cartridge receptacle (10).

12. System according to one of Claims 6 - 11, **characterized in that** the flange cooperates in a sealing manner with the cartridge receptacle (10).

13. System according to one of Claims 6 - 12, **characterized in that** the cartridge (1) and the cartridge receptacle (10) are connected together in a rotationally fixed manner.

14. System according to one of Claims 6 - 13, wherein the cartridge receptacle (10) has a spike guide (29) and the piercing means (16) is mounted in a displaceable manner within the spike guide (29), wherein the piercing means (16) is displaceable between a retracted position, in which the piercing means (16) is away from the membrane (14), and an extended position, in which the piercing means (16) pierces the membrane (14) and projects into the cartridge (1).

15. System according to one of Claims 6 - 14, **characterized in that** at least one lateral channel (71) for conveying the beverage substrate and/or foodstuff substrate in the direction of the mixing chamber (8) when the membrane (14) is pierced by the piercing means (16) has been introduced into the outer wall of the piercing means (16).

16. System (10) according to one of Claims 6 to 15, wherein a compressed-air line (31) is integrated into the piercing means (16), and wherein a compressed-air connection of the compressed-air line (31) for connecting to a compressed-air source is formed on a side of the piercing means (16) that is remote from the cartridge (1), said compressed-air connection being accessible in particular from outside the cartridge receptacle (10), and wherein a compressed-air outlet of the compressed-air line (31) for blowing the compressed air into the cartridge (1) is formed on a side of the piercing means (16) that faces the cartridge (1).

## Revendications

1. Cartouche (1) comportant une région de paroi (6) à l'une des extrémités de laquelle se raccorde une région de liaison (4) qui est fermée en particulier par une membrane (14) et à l'extrémité opposée de laquelle est prévue éventuellement une région de fond (7), la région de paroi et éventuellement la région de fond définissant une cavité qui reçoit un substrat de boisson et/ou d'aliment, la région de liaison (4) présentant au moins un rebord (5) qui est doté d'un moyen de positionnement, **caractérisée en ce que** le moyen de positionnement entoure une région périphérique rectiligne (28) de l'au moins un rebord (5), la périphérie du rebord (5) étant de forme incurvée à l'extérieur de la région périphérique rectiligne, un col (3) étant prévu entre la région de paroi (6) et la région de liaison (4).

2. Cartouche (1) selon la revendication 1, **caractérisée en ce qu'**un bord s'étendant parallèlement à l'axe longitudinal de la cartouche (1) est formé respectivement dans la région de transition entre la région périphérique rectiligne et la région périphérique incurvée.

3. Cartouche (1) selon l'une des revendications 1 et 2, **caractérisée en ce que** la membrane (14) est prévue sur un rebord.

4. Cartouche (1) selon l'une des revendications 1 à 3, **caractérisée en ce qu'**un moyen de fixation (26) est prévu dans la région de paroi (6) et/ou dans la région du col.

5. Cartouche (1) selon l'une des revendications 1 à 4, **caractérisée en ce que** la cartouche (1) présente deux rebords (5), lesquels sont disposés de manière décalée l'un par rapport à l'autre dans la direction longitudinale de la cartouche (1), seulement l'un des deux rebords (5) ou les deux rebords (5) présentant le moyen de positionnement.

6. Système présentant une cartouche (1) selon l'une des revendications précédentes et un dispositif de réception de cartouche (10) qui est prévu au niveau de la région de liaison (4) de la cartouche.

7. Système selon la revendication 6, **caractérisé en ce que** le dispositif de réception de cartouche (10) comprend un moyen de perçage (16) qui perfore la membrane (14), une arrivée d'agent de dilution, en particulier d'eau (15), une chambre de mélange (13) dans laquelle l'agent de dilution et le substrat de boisson et/ou d'aliment sont mélangés et une sortie de boisson et/ou d'aliment (11) .

8. Système selon l'une des revendications 6 ou 7, **caractérisé en ce que** l'arrivée d'agent de dilution, en particulier d'eau (15) et la sortie de boisson et/ou d'aliment (11) sont prévues à des extrémités opposées du dispositif de réception de cartouche (10).

9. Système selon l'une des revendications 6 à 8, **caractérisé en ce que** le moyen de perçage (16) est prévu de manière alignée avec l'arrivée d'agent de dilution, en particulier d'eau (15) et la sortie de boisson et/ou d'aliment (11).

10. Système selon l'une des revendications 6 à 9, **caractérisé en ce que** la section transversale d'écoulement de la chambre de mélange s'élargit tout d'abord puis diminue à nouveau par rapport au sens d'écoulement de l'agent de dilution.

11. Système selon l'une des revendications 6 à 10, **caractérisé en ce qu'**un moyen de recouvrement (8) recouvre la sortie de boisson et/ou d'aliment (11) du dispositif de réception de cartouche (10).

12. Système selon l'une des revendications 6 à 11, **caractérisé en ce que** le rebord coopère de manière étanche avec le dispositif de réception de cartouche (10) .

13. Système selon l'une des revendications 6 à 12, **caractérisé en ce que** la cartouche (1) et le dispositif de réception de cartouche (10) sont reliés l'un à l'autre de manière solidaire en rotation.

14. Système selon l'une des revendications 6 à 13, le dispositif de réception de cartouche (10) comprenant un guide de pointe (29) et le moyen de perçage (16) étant monté de manière déplaçable à l'intérieur du guide de pointe (29), le moyen de perçage (16) étant déplaçable entre une position rentrée dans laquelle le moyen de perçage (16) est espacé de la membrane (14) et une position sortie dans laquelle le moyen de perçage (16) transperce la membrane (14) et fait saillie jusque dans la cartouche (1).

15. Système selon l'une des revendications 6 à 14, **caractérisé en ce qu'**au moins un canal latéral (71) servant à guider le substrat de boisson et/ou d'aliment en direction de la chambre de mélange (8) lorsque la membrane (14) est transpercée par le moyen de perçage (16) est ménagé dans la paroi extérieure du moyen de

16. Système (10) selon l'une des revendications 6 à 15, dans lequel une conduite d'air comprimé (31) est intégrée dans le moyen de perçage (16) et dans lequel, sur un côté du moyen de perçage (16) opposé à la cartouche (1), un raccord d'air comprimé, en particulier accessible depuis l'extérieur du dispositif de réception de cartouche (10), de la conduite d'air comprimé (31) est réalisé pour la liaison à une source d'air comprimé et dans lequel, sur un côté du moyen de perçage (16) tourné vers la cartouche (1), une sortie d'air comprimé de la conduite d'air comprimé (31) est réalisée pour l'insufflation de l'air comprimé dans la cartouche (1).
